# EUROPÄISCHE PATENTSCHRIFT

(11) **EP 0 712 811 B1**
(45) Veröffentlichungstag und Bekanntmachung des Hinweises auf die Patenterteilung: **05.07.2000**
(21) Anmeldenummer: 95117623.9
(22) Anmeldetag: 09.11.1995
(51) Int. Cl.: C03B 5/00, B09B 3/00, C03B 5/12, C03B 3/02, C03B 5/04, C03B 5/235

(54) **Verfahren zur thermischen Entsorgung von Reststoffen**
Method for thermal treating of waste materials
Procédé de traitement thermique des déchets

(30) Priorität: 09.11.1994 DE 4439939
(43) Veröffentlichungstag der Anmeldung: 22.05.1996
(73) Patentinhaber: DEUTZ Aktiengesellschaft, 51063 Köln (DE)
(72) Erfinder: Jungk, Klaus, D-51143 Köln (DE)

(56) Entgegenhaltungen:
- EP-A- 0 636 584
- WO-A-95/01937
- DE-A- 4 000 147
- DE-A- 4 117 444
- DE-A- 4 204 769
- GB-A- 1 179 536
- US-A- 5 284 503

## Beschreibung

Die Erfindung ist auf ein Verfahren und auf eine Vorrichtung gerichtet zur thermischen Entsorgung von Reststoffen wie z. B. Hausmüll, Sondermüll, Klärschlamm, festen Pyrolyserückständen, Flugstäuben, Rostaschen oder dergleichen durch Vergasung, Verbrennung oder Mineralisierung in einem oberhalb eines Unterofens angeordneten Schmelzzyklon bei Temperaturen oberhalb von 1300 °C, aus dem die bei diesen hohen Temperaturen gebildeten Reaktionsprodukte nach unten in den Unterofen ausgetragen werden, wo dann eine Trennung der Reaktionsprodukte in eine flüssige Restschlacke und in ein Abgas erfolgt.

Die wirtschaftliche und umweltverträgliche Beseitigung von Reststoffen macht erhebliche Schwierigkeiten. Dies gilt insbesondere dann, wenn bei thermischen Verfahren die Reststoffe zur ihrer Beseitigung beispielsweise in Verbrennungsanlagen mit Rostfeuerungen verbrannt werden. Rostfeuerungen müssen mit hohen Luftüberschußzahlen betrieben werden, so daß große Mengen an Rauchgas mit relativ geringer Temperatur entstehen. Große Rauchgasmengen bedingen entsprechend große und damit kostenintensive Abgasreinigungsanlagen. Außerdem ist bei Rostfeuerungen nicht ausgeschlossen, daß die Brenntemperatur zumindest teilweise unter 1000 °C fällt. Bei solchen niedrigen Temperaturen zerfallen einige gefährliche Giftstoffe wie z. B. Dioxin noch nicht. Außerdem verflüchtigen sich viele der in den Reststoffen enthaltenen Schwermetalle nicht, so daß diese Stoffe in unerwünschter Weise in die Rostasche gelangen.

Zur Behebung der bei solchen der thermischen Beseitigung dienenden Anlage entstehenden Nachteile ist es bekannt, als Verbrennungsanlage eine Schmelzanlage einzusetzen, in der bei Temperaturen oberhalb von 1300 °C die Reststoffe verbrennen und Unverbranntes in eine schmelzflüssige Restschlacke umgewandelt werden. Die in den Reststoffen enthaltenen Schwermetalle verdampfen bei diesen hohen Temperaturen zumindest teilweise und werden mit dem Abgas zu einer Rauchgasreinigung geführt.

Bekannte thermische Verfahren mit Einschmelzen der Reststoffe in Schmelzkammern oder Schmelzzyklonen sind beispielsweise der Hochtemperatur-Schmelzprozeß CORMIN (Firmenprospekt der KHD Humboldt Wedag AG "Sonderabfall-Verbrennung" 13-520d) oder das Schwel-Brenn-Verfahren (Firmenprospekt der Siemens AG Bereich Energieerzeugung KWU "Die Schwel-Brenn-Anlage").

Die bei den bekannten Verfahren anfallende schadstoffarme schmelzflüssige Restschlacke ist nach ihrer Abkühlung deponiefähig bzw. kann beispielsweise als Straßenbaumaterial eingesetzt werden. Eine höherwertige Verwertung scheitert aber an den noch zu hohen Schwermetallgehalten und an die schwankende und einer weiteren Verwendung entgegenstehenden chemische Zusammensetzung.

Um den Metallgehalt der Schmelzen zu reduzieren, wird in der DE-A-41 17 444 ein Verfahren vorgeschlagen, in dem in einem Schmelzofen bei einer Schmelzbadtemperatur von 1300 bis 1500°C die Rückstände einer Abfallverbrennungsanlage eingeschmolzen werden. Bei einer Verweilzeit der Rückstände im Schmelzbad von 5 bis 24 Stunden reichem sich am Boden des Schmelzofens aufgrund ihrer höheren Dichte die Metalle an und werden in Form einer metallreichen Schmelze am Boden des Schmelzofens abgezogen. Die darüber geschichtete metallarme Restschmelze ist völlig glasartig und wird auf Höhe der Oberfläche der Schmelze seitlich abgezogen und in einem Wasserbad gekühlt. Auch bei diesem Verfahren wird nur eine Restschlacke erhalten, die auf Deponien abgelagert wird oder als Einsatzstoff wiederverwendet wird, wo glasartige Schlacken einsetzbar sind.

Aus der DE-C-40 00 147 ist ein Verfahren zum Verglasen von Kohlenstoff oder andere brennbare Bestandteile enthaltenden Abfallstoffen wie Schlämme insbesondere Klärschlämme und Aschen in einem Glasschmelzofen bekannt, wobei die zu verglasenden Abfallstoffe oberhalb der Glasschmelzwanne mit dem Glasbad in einen Verbrennungszyklon eingegeben und dort verbrannt werden und die dabei entstehenden Aschen auf die Schmelze herabfallen und in diese integriert werden. Eine thermische/chemische Nachbehandlung der Schmelze findet nicht statt, so daß die zu verglasenden Abfallstoffe, sofern diese schwermetallhaltig sind, außer zur Verwendung z. B. als Straßenbaumaterial nicht zu höherwertigen Verwertungen herangezogen werden können.

Aus der DE-C-42 04 769 ist ein Verfahren zur Einschmelzung und Beseitigung von staubförmigen Abfallstoffen aus Verbrennungsanlagen in einem Elektroniederschachtofen bekannt, in dessen Schlackenschmelzbad die staubförmigen Stoffe von oben über wenigstens eine hohle Elektrode eingeführt und dabei die einschmelzfähigen Bestandteile der Stoffe in die Schlacke ohne weitere Nachbehandlung derselben eingebunden werden, wobei die Schlacke von Zeit zu Zeit abgestochen wird. Sofern die einzuschmelzenden staubförmigen Stoffe Metalle enthalten, sollen sich diese unterhalb des Schlackenschmelzbades in einem Schmelzbad sammeln, welches hauptsächlich aus einer Eisenschmelze besteht. Das heißt, daß Schwermetallgehalte, die sich nicht unterhalb des Schlackenschmelzbades sammeln, in der Schlackenschmelze verbleiben, so daß die Verwertung der nach dem bekannten Verfahren erhaltenen Schlackenschmelze wiederum begrenzt ist.

Es ist Aufgabe der Erfindung, ein Verfahren und eine Vorrichtung zu schaffen, mit der nicht nur eine thermische Entsorgung der Reststoffe möglich wird, sondern bei der die verbleibende Restschmelze zusätzlich in hochwertigen Materialien umgewandelt werden kann.

Die gestellte Aufgabe wird verfahrensmäßig gelöst mit dem Verfahren gemäß Anspruch 1 und vorrichtungsmäßig mit der Vorrichtung gemäß Anspruch 7.

Bei der Verbrennung der Reststoffe im Schmelzzyklon werden bei oxidierender Gasatmosphäre die Schwermetalle in ihre Oxide überführt und diese durch ihre relativ hohen Dampfdrücke oberhalb von 1300 °C teilweise verdampft und in das Abgas überführt, aus dem sie kondensiert und abgetrennt werden.

Bei der gewünschten höheren Reinheit der Restschmelze bezüglich ihrer Schwermetallgehalte wird erfindungsgemäß der Schmelzzyklon in definierter Weise reduzierend betrieben. D. h., der zur Verbrennung notwendige Sauerstoff wird unterstöchiometrisch eingestellt. Bei dieser Fahrweise werden Schwermetalle wie Blei und Zink nicht oxidiert bzw. bei bereits vorhandener Oxidform wieder reduziert. Die so entstandenen Metalle besitzen bei den angewendeten hohen Temperaturen oberhalb von 1300°C einen noch höheren Dampfdruck als ihre Oxide und verdampfen infolge dessen vollständiger.

Bei der Einstellung des Sauerstoffpartialdrucks im Schmelzzyklon ist darauf zu achten, daß nicht so weitgehend reduziert wird, daß unverbrannter Kohlenstoff oder unverbrannte Kohlenstoffverbindungen sich in der Restschlakke anreichern.

Nach der Abtrennung der flüssigen Restschlacke von den Abgasen werden die Abgase nachverbrannt und dabei die verflüchtigten Metalle wieder in ihre Oxidform überführt. Danach werden sie kondensiert und aus dem Abgas abgetrennt.

Bei extrem hohen Anforderungen an den Schwermetallgehalt der Restschmelze kann die Verflüchtigung der Schwermetalle aus der Schmelze zusätzlich erfindungsgemäß durch den Einsatz einer oder mehrerer Aufblaslanzen im Unterofen, in dem die Restschmelze nach ihrem Austritt aus dem Schmelzzyklon ein Schmelzbad bildet, verbessert werden. Hierbei wird ein Brennstoffsauerstoffgemisch mit hoher Geschwindigkeit auf die Oberfläche des Schmelzbades geblasen und dadurch ein zusätzlicher Anteil an Schwermetallen verdampft.

Durch die beschriebenen Maßnahmen, der Einstellung des Sauerstoffpartialdrucks im Schmelzzyklon sowie dem Einsatz von mindestens einer Aufblaslanze im Unterofen, läßt sich der Gehalt an Schwermetallen in der Restschlacke entsprechend den gewünschten Anforderungen genau einstellen.

Um diese nun fast schwermetallfreie Restschmelze nicht nur auf Deponien abzulagern, sondern sie als hochwertiges Material weiterer Verwendung zuzuführen, werden erfindungsgemäß bereits vor dem Eintrag der Reststoffe in den Schmelzzyklon diesen Reststoffen Zuschlagsstoffe zugemischt, die in ihrer Zusammensetzung und Menge den Reststoffen angepaßt sind, so daß sich eine Restschmelze ergibt, die in ihrer chemischen Zusammensetzung und ihren physikalischen Eigenschaften genau vorab bestimmten Werten entspricht und die beispielsweise zur Herstellung von Steinwolle, als Hüttensandkomponente zur Herstellung von Hochofenzement oder als Portlandzementklinker zur Herstellung von Zement verwendet werden kann. Auch andere Anwendungsmöglichkeiten im Bereich der Steine und Erden sind bei entsprechender Auswahl und Dosierung der Zuschlagsstoffe möglich.

Weitere Vorteile, Einzelheiten und Merkmale der Erfindung werden im folgenden anhand eines in Zeichnungsfiguren dargestellten Anwendungsbeispiel näher erläutert.

Es zeigen:
- Fig. 1:: den Verfahrensstammbaum einer thermischen Entsorgungsanlage;
- Fig. 2:: eine geschnittene Teilansicht einer thermischen Entsorgungsanlage.

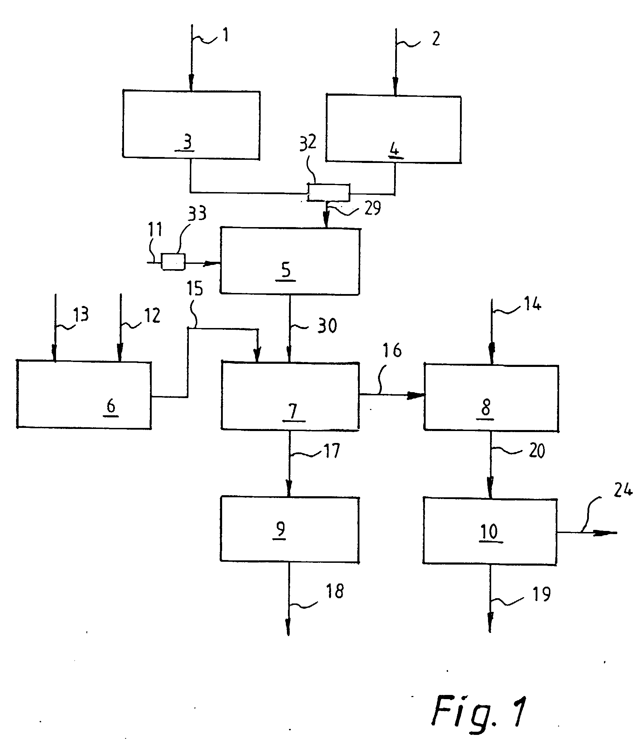

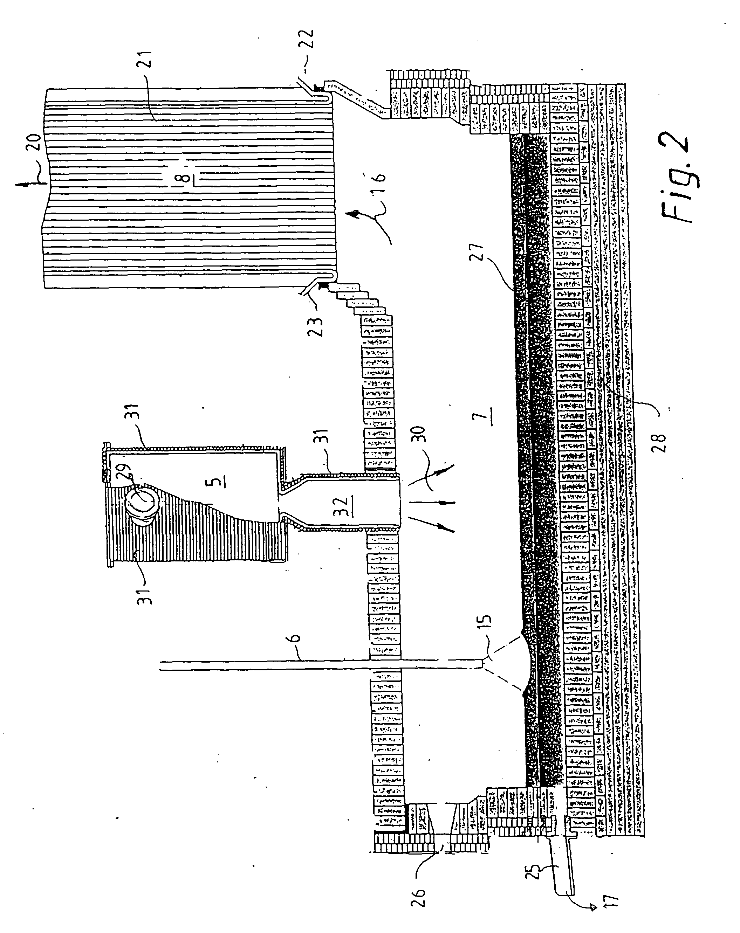

Wie den Fig. 1 und 2 zu entnehmen ist, werden die vorher zerkleinerten ggf. bereits vorher thermisch behandelten Reststoffe (1) und die zerkleinerten Zuschlagsstoffe (2) über Dosiervorrichtungen (3, 4) in den Mischer (32) geführt, dort intensiv gemischt und die Mischung (29) gemeinsam mit der Verbrennungsluft bzw. bevorzugt Sauerstoff (11) tangential über die Eintragsöffnung (29) in den Schmelzzyklon (5) eingeblasen.

Durch Regelung der Sauerstoffmenge mittels der Regelvorrichtung (33) wird der Sauerstoffpartialdruck innerhalb des Schmelzzyklons (5) auf den gewünschten Wert eingestellt.

Der Schmelzzyklon (5) ist mit einer an sich bekannten Wasserkühlung über Rohrleitungen (31) versehen.

Aus dem Schmelzzyklon (5) gelangen die Reaktionsprodukte (30) durch eine Öffnung im Boden des Schmelzzyklons (5) zunächst in einen Beruhigungsstutzen (32), der gleichfalls wassergekühlt ist, in dem die tangentiale Strömungsrichtung der Reaktionsprodukte (30) in eine nach unten gerichtete axiale Strömung umgelenkt wird. Die Reaktionsprodukte (30) gelangen dann in den unterhalb des Schmelzzyklons (5) angeordneten Unterofen (7), in dem die Reaktionsprodukte (30) in die Restschmelze (27) und in das Abgas (16) aufgetrennt werden.

In den aus beispielsweise feuerfesten Steinen (28) gemauerten Unterofen sind von oben eine oder mehrere Aufblaslanzen (6) geführt, durch die ein Brennstoff (13)-Sauerstoff (12)-Gemisch (15) von oben auf das Schmelzbad (27) aufgeblasen wird, wodurch die Verdampfung der Schwermetalle gefördert wird.

Ein Zusatzbrenner (26) sorgt ggf. dafür, daß die Temperatur im Unterofen nicht auf für die Schwermetallverdampfung kritische Werte abfällt bzw. daß die Restschmelze nicht soweit abkühlt, daß der kontinuierliche Austrag der nun weitgehend von Schwermetallen befreiten Restschmelze (17) über die Austragsrinne (25) unterbunden wird. Weiterhin dient dieser Zusatzbrenner als Vorwärmbrenner zur Aufheizung des Unterofens (7) bei der Inbetriebnahme nach einem Stillstand.

Die aus der Austragsrinne (25) ausgetragene schwermetallfreie Restschmelze (17) wird nun abgekühlt, beispielsweise über ein Wasserbad oder durch Kontakt mit wassergekühlten Platten, und dann beispielsweise in einer entsprechenden Vorrichtung (9) zum gewünschten Produkt (18) verarbeitet. Bei der Herstellung von Steinwolle wird die Restschmelze (17) direkt nach ihrem Austrag aus dem Unterofen (7) verdüst und dann erst gekühlt.

Das im Unterofen (7) aus den Reaktionsprodukten (30) sowie aus verdampften Metallen der Restschmelze und aus dem Abgas der Aufblaslanzen bestehende Abgas (16) wird einer Nachverbrennungsvorrichtung (8) zugeführt, die an dem dem Schmelzaustrag entgegengesetzten Ende des Unterofens (7) oberhalb des Unterofens (7) angeordnet ist und in der die Metalldämpfe in ihre Oxidform überführt sowie unverbrannte Kohlenwasserstoffverbindungen und noch vorhandene Schadstoffe verbrannt werden. Hierzu wird Verbrennungsluft bzw. Sauerstoff (14) geregelt der Nachverbrennungsvorrichtung zugeführt. Die bei dieser Nachverbrennung anfallende Wärme wird über einen Wärmetauscher genutzt. In der Zeichnungsfigur 2 ist ein mit einem Fluid gefüllter Rohrwärmetauscher (21) mit einer Eintrittsöffnung (22) für das Fluid und einer Auslaßöffnung (23) für das Fluid schematisch dargestellt. Das bei der Nachverbrennung entstehende Rauchgas (20), das nun die Metalle in oxidischer Form enthält, wird nun in bekannter Weise einer Vorrichtung (10) zur Kondensation und Abtrennung der Metalloxide und der Stäube geführt, wobei ein mit Schwermetalloxid angereicherter Staub (24) anfällt.

Die restlichen Staubanteile und evtl. noch vorhandene Schadstoffe im Rauchgas werden in einer abschließenden Rauchgasreinigung (19) aus dem Rauchgas abgetrennt.

Die wesentlichen Vorteile des erfindungsgemäßen Verfahrens sind im wesentlichen folgende:

Wegen der hohen Schmelztemperatur werden weitgehend alle umweltbelastenden organischen Schadstoffe zerstört und vorhandene Schwermetalle in ihre Dampfform überführt und mit dem Abgas entfernt, woraus sie nach ihrer Kondensation abgetrennt werden. Die schwermetallfreie Restschlacke wird durch Zusatz von Zuschlagsstoffen auf genau definierte chemische und physikalische Eigenschaftswerte eingestellt, so daß die Restschlacke kein Abfallstoff mehr darstellt, der deponiert werden muß, sondern sie stellt ein Wertprodukt dar, das je nach vorheriger Zusammensetzung der Reststoffe und der Wahl der Zuschlagsstoffe vielfache Verwendung finden kann. Als Beispiele für ihre Verwendung werden genannt:
- Herstellung von Zement, wobei die Restschlacke einem Portlandzementklinker entspricht;
- Herstellung von Hochofenzement, wobei die Restschlacke einem Hüttensand entspricht;
- Herstellung von Steinwolle, wobei die Restschlacke einem mineralisierten Glas entspricht.

## Patentansprüche

1. Verfahren zur thermischen Entsorgung von Reststoffen (1) wie z. B. Hausmüll, Sondermüll, Klärschlamm, festen Pyrolyserückständen, Flugstäuben, Rostaschen oder dergleichen durch Vergasung, Verbrennung oder Mineralisierung in einem oberhalb eines Unterofens (7) angeordneten Schmelzzyklon (5) bei Temperaturen oberhalb von 1300 °C, aus dem die bei diesen hohen Temperaturen gebildeten Reaktionsprodukte (30) nach unten in den Unterofen (7) ausgetragen werden, wo dann eine Trennung der Reaktionsprodukte in eine flüssige Restschlacke (27) und in ein Abgas (16) erfolgt, wobei
a) durch gezielte Einstellung des Sauerstoffpartialdrucks im Schmelzzyklon (5) und der Anwendung von mindestens einer Aufblaslanze (6) im Unterofen (7) die Verdampfung vorhandener Schwermetalle so erleichtert wird, daß eine Restschlacke (27) mit äußerst niedrigem Schwermetallgehalt resultiert und zusätzlich
b) den Reststoffen (1) vor ihrem Eintrag in den Schmelzzyklon (5) je nach Art der Reststoffe unterschiedliche Zuschlagsstoffe (2) in definierter Menge zugemischt werden, so daß eine Restschlacke (27) mit gewünschten, genau definierten chemischen und physikalischen Eigenschaften erhalten wird.

2. Verfahren nach Anspruch 1, dadurch gekennzeichnet, daß die Zuschlagsstoffe (2) so ausgewählt sind, daß die schwermetallarme Restschlacke (27) nach ihrer Abkühlung als Hüttensandkomponente zur Herstellung von Hochofenzement geeignet ist.

3. Verfahren nach Anspruch 1, dadurch gekennzeichnet, daß die Zuschlagsstoffe (2) so ausgewählt sind, daß die metallarme Restschlacke (27) nach ihrer Abkühlung einem Portlandzementklinker entspricht.

4. Verfahren nach Anspruch 1, dadurch gekennzeichnet, daß die Zuschlagsstoffe (2) so ausgewählt sind, daß die metallarme Restschlacke (27) nach ihrer Abkühlung zur Herstellung von Steinwolle oder als Straßenbaumaterial verwendet werden kann.

5. Verfahren nach Anspruch 1, 2, 3 oder 4, dadurch gekennzeichnet, daß das im Unterofen (7) abgetrennte Abgas (16) einer Nachverbrennungvorrichtung (8) zugeführt wird, in der das Abgas (16) zur Überführung der gasförmigen Schwermetalle in Schwermetalloxide oxidierend nachverbrannt wird.

6. Verfahren nach Anspruch 5, dadurch gekennzeichnet, daß die bei der Nachverbrennung anfallende Wärme zur Aufheizung eines Fluids genutzt wird.

7. Vorrichtung zur Durchführung des Verfahrens nach einem oder mehreren der vorhergehenden Ansprüche, mit
a) einem oberhalb eines Unterofens (7) angeordneten Schmelzzyklon (5) mit einer tangentialen Eintrittsöffnung (29) für den gemeinsamen Eintrag der Reststoffe (1), der Zuschlagsstoffe (2) und der Verbrennungsluft bzw. dem Verbrennungssauerstoff (11) und einem axialen Austrag nach unten für die Reaktionsprodukte (30) und
b) einer oder mehreren Aufblaslanzen (6), die von oben in den Unterofen (7) geführt und mit ihrem unteren Ende mit Abstand von der Oberfläche der aus den Reaktionsprodukten abgetrennten, ein Schmelzbad bildenden Restschlacke (27) angeordnet sind.

## Claims

1. A method for the thermal disposal of residue materials (1) such as, for instance, household waste, separated waste, sewage sludge, solid pyrolised residues, flue dusts, rust ashes or similar by vaporisation, incineration or mineralising in a melting cyclone (5) arranged above a lower furnace (7) at temperatures above 1300°C, from which the reaction products (30) formed at these high temperatures are extracted into the lower furnace (7) below, where a separation of the reaction products then occurs into a fluid slag (27) and a waste gas (16), whereby
a) by appropriate adjustment of the partial oxygen pressure in the melting cyclone (5) and the application of at least one blower lance (6) in the lower furnace (7), the vaporising of the heavy metals present is so facilitated that a residual slag (27) with extremely low heavy metal content results and additionally
b) various additive materials (2) are admixed in defined quantities to the residual materials (1) before they are put into the smelting cyclone (5), according to the individual type of the residue materials, so that a residual slag (27) with desired, precisely defined chemical and physical characteristics is obtained.

2. A method according to Claim 1, characterised in that the additive materials (2) are selected such that the heavy metal residue slag (27) is suitable after cooling as metallurgic sand components for the production of blast furnace cement.

3. A method according to Claim 1, characterised in that the additive materials (2) are selected such that the low metal residue slag (27) after cooling corresponds to a Portland cement clinker.

4. A method according to Claim 1, characterised in that the additive materials (2) are selected such that the low metal residue slag (27) can be used after cooling for the production of rock wool or as road building material.

5. A method according to Claim 1, 2, 3 or 4, characterised in that the exhaust gas (16) separated in the lower furnace (7) is taken to an after burning device (8), in which the exhaust gas (16) is incinerated for the conversion of the gaseous heavy metals into heavy metal oxides by oxidation.

6. A method according to Claim 5, characterised in that the heat arising from the after burning is used for the heating of a fluid.

7. A device for the performance of the method according to one or more of the foregoing Claims, with
a) a melting cyclone (5) arranged above a lower furnace (7) with a tangential entry opening (29) for the common addition of the residue materials (1), the additive substances (2) and the combustion air or the combustion oxygen (11) and an axial outlet to the bottom for the reaction products (30) and
b) one or more blower lances (6), which are taken from above into the lower furnace (7) and are arranged with their lower ends at a distance from the surface of the residue slag (27) separated from the reaction products, forming a melt bed.

## Revendications

1. Procédé d'élimination thermique des matières résiduelles (1), comme par exemple les déchets domestiques, les déchets spéciaux, les boues d'épuration, les résidus solides de pyrolyse, les poussières volantes, les cendres de grillage, etc., par gazéification, combustion ou minéralisation dans un cyclone de fusion (5) disposé au-dessus de la partie inférieure d'un haut fourneau (7) à des températures supérieures à 1300°C, dont les produits réactionnels (30) formés à ces températures élevées sont extraits par en-dessous dans la partie inférieure du haut fourneau (7), où se produit une séparation des produits réactionnels en un laitier résiduel liquide (27) et en un gaz usé (16), procédé dans lequel,
a) en réglant de façon ciblée la pression partielle d'oxygène dans le cyclone de fusion (5) et l'utilisation d'au moins une lance de soufflage (6) dans la partie inférieure du haut fourneau (7) on facilite l'évaporation des métaux lourds présents de manière qu'il en résulte un laitier résiduel (27) ayant une teneur en métaux lourds aussi faible que possible, et en outre,
b) on mélange aux matières résiduelles (1), avant leur introduction dans le cyclone de fusion (5), selon le type des matières résiduelles, des additifs différents (2) en une quantité définie, si bien que l'on obtient un laitier résiduel (27) ayant les propriétés chimiques et physiques désirées et souhaitées et précisément définies.

2. Procédé selon la revendication 1,
caractérisé en ce que
les additifs (2) sont choisis de manière que le laitier résiduel (27) pauvre en métaux lourd convienne, après avoir été refroidi, comme composant sable de fonderie pour la production de ciment de haut fourneau.

3. Procédé selon la revendication 1,
caractérisé en ce que
les additifs (2) sont choisis de manière que le laitier résiduel (27) pauvre en métaux lourds corresponde à un clinker de ciment Portland après son refroidissement.

4. Procédé selon la revendication 1,
caractérisé en ce que
les additifs (2) sont choisis de manière que le laitier résiduel pauvre en métaux lourds puisse être utilisé, après son refroidissement, pour la production de laine minérale ou comme matériau de construction routier.

5. Procédé selon la revendication 1, 2, 3 ou 4,
caractérisé en ce qu'
on introduit le gaz usé (16) séparé dans la partie inférieure du four (7) dans un dispositif de postcombustion (8), dans lequel le gaz usé (16) est soumis à une postcombustion oxydante aux fins de transformation des métaux lourds gazeux en oxyde de métaux lourds.

6. Procédé selon la revendication 5,
caractérisé en ce que
la chaleur qui apparaît lors de la postcombustion est utilisée pour le chauffage d'un fluide.

7. Dispositif de réalisation du procédé selon une ou plusieurs des revendications précédentes, avec
a) un cyclone de fusion (5), disposé au-dessus de la partie inférieure d'un four (7), avec une ouverture d'entrée tangentielle (29) pour l'introduction simultanée des matières résiduelles (1), des additifs (2) et de l'air de combustion ou selon les cas de l'oxygène de combustion (11) et une sortie axiale vers le bas pour les produits réactionnels (30) et,
b) une ou plusieurs lances de soufflage (6), qui aboutissent par le haut dans la partie inférieure du four (7) et qui sont disposées avec leur extrémité inférieure à un certain intervalle de la surface du laitier résiduel (27), qui est séparé des produits réactionnels et qui forme un bain de fusion.
